(19) Europäisches Patentamt
European Patent Office
Office européen des brevets

(11) **EP 2 843 378 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(51) Int Cl.:
*G01G 19/08* (2006.01)   *E02F 9/26* (2006.01)

(21) Anmeldenummer: **14155760.3**

(22) Anmeldetag: **19.02.2014**

(54) **Arbeitsmaschine mit Hubvorrichtung und Wiegeeinrichtung**

Working machine with lifting device and weighing device

Machine de travail dotée d'un dispositif de levage et d'un dispositif de pesée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2013 DE 102013203826**

(43) Veröffentlichungstag der Anmeldung:
**04.03.2015 Patentblatt 2015/10**

(73) Patentinhaber: **Deere & Company**
**Moline, IL 61265 (US)**

(72) Erfinder:
• **Peters, Ole**
  **25724 Neufeld (DE)**
• **Ballaire, Frederic**
  **67434 Neustadt (DE)**
• **Hahn, Klaus**
  **68169 Mannheim (DE)**

(74) Vertreter: **John Deere GmbH & Co. KG**
**Global Intellectual Property Services**
**John-Deere-Straße 70**
**68163 Mannheim (DE)**

(56) Entgegenhaltungen:
**WO-A1-2004/005180     DE-A1- 10 138 974**
**DE-A1- 19 901 563**

**Beschreibung**

Die Erfindung betrifft eine Arbeitsmaschine mit einer Hubvorrichtung zum Heben und Senken einer Nutzlast und mit einer Wiegeeinrichtung zum Wiegen der Nutzlast und ein Verfahren zum Wiegen einer Nutzlast.

Es ist bekannt Arbeitsmaschinen, beispielsweise mit einem Frontlader ausgerüstete Traktoren, Teleskoplader oder dergleichen, mit einer Wiegeeinrichtung auszustatten, um das Gewicht der aufgenommenen Nutzlast beziehungsweise der Ladung zu ermitteln.

Bei einfachen Systemen wird die Hubvorrichtung, beispielsweise der Frontlader, nach dem Aufnehmen der Nutzlast immer in die gleiche Wiegeposition verfahren beziehungsweise es wird die gleiche Wiegeposition mit einer bestimmten Geschwindigkeit durchfahren und die Nutzlast anhand einer Druckmessung in den Hydraulikvorrichtungen bestimmt. Dies ist möglich, da in dieser Wiegeposition die immer gleichen geometrischen Verhältnisse vorherrschen, so dass über die bekannten Hebelverhältnisse und dem bestimmten Hydraulikdruck die Nutzlast berechnet werden kann. Das Erfordernis immer in eine Wiegeposition verfahren oder eine Wiegeposition mit eine bestimmten Geschwindigkeit durchfahren zu müssen ist zeitaufwendig und außerdem kommt es zumindest bei nicht vollkommen ebener Stellung des Traktors infolge von Schwerpunktverlagerungen zu Messungenauigkeiten. Etwas aufwendigere Systeme sind um einen Neigungssensor erweitert, der einen Messfehler auf schiefer Ebenen zumindest korrigiert.

Die DE 10 2009 051 210 A1 beschreibt eine Wiegeeinrichtung für eine Hubvorrichtung, bei der ein Sensor an der Hubvorrichtung eine Winkellage der Hubvorrichtung erfasst. Hierdurch kann die Nutzlast während einer Hubbewegung in verschiedenen Stellungen ermittelt werden.

Ausgehend hiervon ist die Aufgabe der vorliegenden Erfindung eine weiter verbesserte Wiegeeinrichtung und ein Verfahren zum Wiegen einer Nutzlast bereitzustellen.

Die Aufgabe wird gelöst durch eine Arbeitsmaschine nach Anspruch 1 und ein Verfahren nach Anspruch 6.

Durch die erfindungsgemäße Ausgestaltung der Arbeitsmaschine mit Hubvorrichtung und Wiegeeinrichtung ist es möglich die Gewichtskraft einer Nutzlast in oder an einem Anbauelement kontinuierlich zu messen und zwar unabhängig davon, ob die Arbeitsmaschine sich in Bewegung befindet, ob sie geneigt steht oder wie groß der Abstand der Nutzlast der zweiten Schwenkachse $Y_2$ ist.

In bevorzugter Ausgestaltung ist durch eine Gegenüberstellung von über das erste und zweite Kraftsignal berechneten Drehmomenten $TQ_1$ und $TQ_2$ um die Schwenkachsen $Y_1$ und $Y_2$ und von über das Beschleunigungssignal berechneten Drehmomenten um die Schwenkachsen $Y_1$ und $Y_2$ die über das Anbauelement aufgenommene Nutzlast bestimmbar. Hierdurch kann in vorteilhafterweise die Gewichtskraft der Nutzlast mithilfe einer offenen kinematischen Kette bestimmt werden.

Bevorzugt sind in der Wiegeeinrichtung zur Bestimmung der Nutzlast die Werte

- Länge $r_N$ des ersten Auslegerelements in einer zur Schwenkachse $Y_1$ senkrechten Richtung,
- Masse $m_{Ausleger}$ des ersten Auslegerelements,
- Schwerpunktlage $r_{COGAusleger}$ der Masse $m_{Ausleger}$ bezogen auf die Schwenkachse $Y_1$,
- Masse $m_{Anbau}$ des Anbauelements,
- Schwerpunktlage $r_{COGAnbau}$ der Masse $m_{Anbau}$ bezogen auf die Schwenkachse $Y_2$ abgelegt. Hierdurch sind in vorteilhafter Weise unveränderliche beziehungsweise gegebene Werte für die Bestimmung der Nutzlast unmittelbar verfügbar.

Erfindungsgemäß weist die Sensoreinrichtung einen mit dem zumindest ersten Auslegerelement funktional gekoppelten Beschleunigungssensor auf, um das Beschleunigungssignal als eine Funktion einer auf das erste Auslegerelement wirkenden Beschleunigung bereitzustellen. Hierdurch kann aus dem Beschleunigungssignal und der Masse $m_{Ausleger}$ des ersten Auslegerelements das Drehmoment der Masse $m_{Ausleger}$ um die Schwenkachse $Y_1$ bestimmt werden.

Erfindungsgemäß weist die Sensoreinrichtung einen mit dem Anbauelement funktional gekoppelten Beschleunigungssensor auf, um eine Relativbewegung des Anbauelements gegenüber dem Auslegerelement um die Schwenkachse $Y_2$ zu detektieren. Hierdurch kann aus dem Beschleunigungssignal und der Masse $m_{Anbau}$ des Anbauelements das Drehmoment der Masse $m_{Anbau}$ um die Schwenkachse $Y_2$ bestimmt werden.

Bevorzugt ist die über das Anbauelement aufgenommene Nutzlast näherungsweise über die Formel

$$m_L = [(TQ_1 - TQ_2 - m_{Ausleger} * [\vec{r}_{COGAusleger} \, x \, \vec{a}_{Ausleger}] - m_{Anbau}$$

$$* [\vec{r}_N \, x \, (\downarrow \, ^{K4}_{K3}R * \vec{a}_{Anbau}] - J_{Ausleger} * (\ddot{\vec{\varphi}}_{Ausleger} - \ddot{\vec{\varphi}}_{Fahrzeug}) + (J_{Anbau} + J_{Nutzlast})$$

$$* (\ddot{\vec{\varphi}}_{Anbau} - 2\ddot{\vec{\varphi}}_{Ausleger} + \ddot{\vec{\varphi}}_{Fahrzeug})]_y / [\vec{r}_N \, x \, (\downarrow \, ^{K4}_{K3}R * \vec{a}_{Nutzlast})]_y$$

bestimmbar ist, wobei

| | |
|---|---|
| $m_L$ | die Masse der Nutzlast, |
| $TQ_1$, $TQ_2$ | das Drehmoment um die Schwenkachse $Y_1$ bzw. $Y_2$, |
| $a_{Fahrzeug}$, $a_{Ausleger}$, $a_{Anbau}$ | die Beschleunigungen des Auslegers bzw. des Anbaus, |
| $J_{Ausleger}$, $J_{Anbau}$, $J_{Nutzlast}$ | die Trägheitsmomente des Auslegers, des Anbaus bzw. der Nutzlast, |
| $\varphi_{Fahrzeug}$, $\varphi_{Ausleger}$, $\varphi_{Anbau}$ | die Winkelbeschleunigung des Fahrzeugs, des Auslegers, des Anbaus sind. |

Diese Form der Berechnung bietet bei dem dynamischen Wiegen die höchste Genauigkeit bei der Bestimmung der Nutzlast. Zur Vereinfachung kann $a_{Nutzlast}$ annähernd gleich $a_{Anbau}$ gesetzt werden. Da $J_{Nutzlast}$ einen geringen Einfluss auf $m_L$ haben, kann $J_{Nutzlast}$ zur Vereinfachung geschätzt werden.

Die Richtungsvektoren sind immer auf ein Bauteil bezogen, d.h. sie sind konstant und beziehen sich auf das Koordinatensystem des jeweiligen Bauteils. Werden sie addiert bzw. subtrahiert müssen zuvor alle Vektoren auf das gleiche Koordinatensystem transformiert werden. z.B.:

$$\vec{r}_{\text{Koordinatensystem3}} = \downarrow {}^{K4}_{K3}R * \vec{r}_{\text{Koordinatensystem4}}$$

Das gleiche gilt für Beschleunigungsvektoren.

Massen und Schwerpunktspositionen an den Bauteilen sind konstant, solange die Struktur nicht verändert wird. Eine Ausnahme ist der Zylinder, der je nach Position verschiedene Ölvolumina beinhaltet. Die Trägheitsmomente J beziehen sich nur auf die Y-Haupttträgheitsachse der Bauteile, also ohne Steineranteil.Weitere Bauteile die berücksichtigt werden müssen sind die hydraulischen Stellzylinder, sowie die Bauteile am Gelenkviereck. Je nach Richtung der Beschleunigung im Bauteilschwerpunkt bewirken diese Bauteile ein positives oder negatives Drehmoment in den jeweiligen Gelenken.

In einer vereinfachten Ausgestltung wird lediglich auf nur ein Beschleunigungssignal zurückgegriffen. Zum Beispiel auf das Beschleunigungssignal des Chassis der Arbeitsmaschine. Da mit der Kenntnis der Winkelgeschwindigkeiten φ, der Winkelbeschleunigungen φ, der Kinematik und der Auslegerelementbewegung und der Anbauelementbewegung können die Beschleunigungen in den jeweiligen Bauteilschwerpunkten berechnet werden. Um Abweichungen zu minimieren ist es jedoch von Vorteil im Bauteilschwerpunkt direkt oder zumindest in der Nahe am selben Bauteil zu messen.

In einer alternativen Ausgestaltung weist die Hubvorrichtung zumindest ein zweites an dem ersten Auslegerelement um eine dritte Schwenkachse $Y_3$ schwenkbar angeordnetes zweites Auslegerelement auf, wobei das Anbauelement um die zweite Schwenkachse $Y_2$ schwenkbar an dem zweiten Auslegerelement angeordnet ist. Damit lässt sich die ebene, offene kinematische Kette der Hubvorrichtung beliebig erweitern und die Wiegevorrichtung lässt sich unter anderem auch bei Radladern oder Schaufelbaggern mit mehrgliedrigen Auslegern einsetzen.

Die Aufgabe wird außerdem gelöst durch ein Verfahren zum Wiegen einer von einer Arbeitsmaschine mit einer Hubvorrichtung zum Heben und Senken einer Nutzlast und mit einer Wiegeeinrichtung zum Wiegen der Nutzlast aufgenommenen Nutzlast, bei dem aus dem ersten Kraftsignal, dem zweiten Kraftsignal und dem Beschleunigungssignal die über das Anbauelement aufgenommene Nutzlast bestimmt wird.

Ein bevorzugtes Ausführungsbeispiel der erfindungsgemäßen Wiegeeinrichtung wird anhand der nachfolgenden Figur beschrieben.

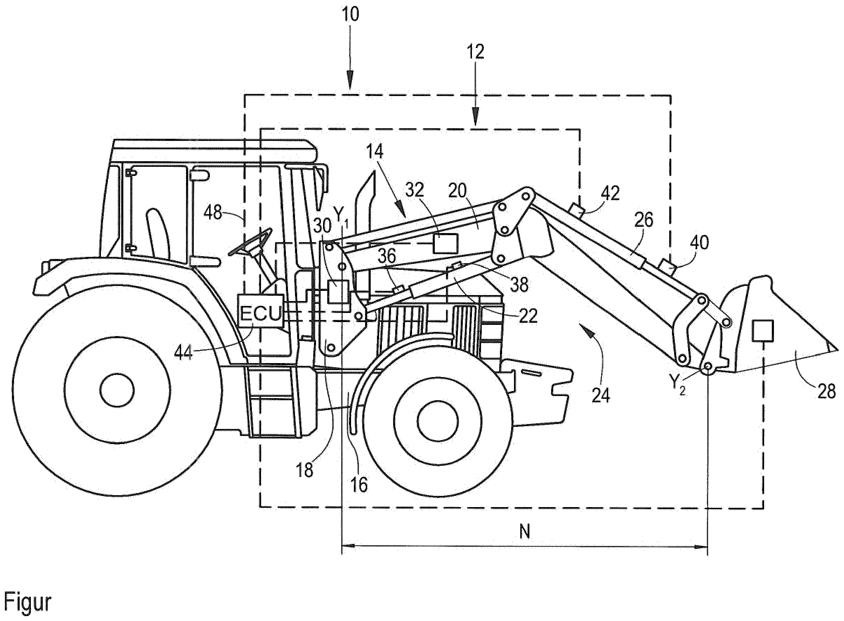

Die Figur zeigt eine landwirtschaftliche Arbeitsmaschine 10 in Form eines Schleppers mit einer Hubvorrichtung 12 in Form eines Frontladers und einer Wiegeeinrichtung 14. Der Frontlader 12 ist über eine mit einem Rahmen 16 des Schleppers 10 verbundene Konsole 18 an den Schlepper 10 lösbar gekoppelt. Der Frontlader 12 weist ein Auslegerelement 20 in Form einer Schwinge auf, die über eine erste Betätigungsvorrichtung 22 in Form eines Hydraulikzylinders um einer Schwenkachse $Y_1$ an der Konsole 18 angelenkt ist. Am vorderen Ende der Schwinge 20 ist ein Anbauelement 28 in Form einer Laderschaufel lösbar befestigt, die über eine zweite Betätigungsvorrichtung 26 in Form eines Hydraulikzylinders und eine Schwenkachse $Y_2$ verschwenkbar an der Schwinge 20 angelenkt ist. Hierbei ist die Laderschaufel 28 an einer nicht dargestellten Werkzeugaufnahme der Schwinge 20 lösbar befestigt.

Der Schlepper 10 weist eine Sensoreinrichtung 24 auf, die im Bereich der Konsole 18 einen ersten Beschleunigungssensor 30 aufweist. Der Beschleunigungssensor 30 kann als 3-achsiges Gyroskop ausgebildet sein. Alternativ kann der Beschleunigungssensor 30 in dem Bereich des Rahmens 16 des Schleppers 10 angeordnet sein. Ferner weist die Sensoreinrichtung 24 einen zweiten Beschleunigungssensor 32 im Bereich der Schwinge 20 auf. Auch der Beschleunigungssensor 32 kann als 3-achsiges Gyroskop ausgebildet sein. Ferner weist die Sensoreinrichtung 24 einen dritten Beschleunigungssensor 34 im Bereich der Laderschaufel 28 auf. Auch der Beschleunigungssensor 34 kann als 3-achsiges Gyroskop ausgebildet sein. Grundsätzlich kann die erfindungsgemäße Arbeitsmaschine mit der Hubvorrichtung und der Wiegeeinrichtung mit lediglich dem ersten Beschleunigungssensor 30 ausgestattet sein, um das erfindungsgemäße Wiegeverfahren durchzuführen.

Desweiteren ist der Hydraulikzylinder 22 mit einem ersten Drucksensor 36 kolbenseitig und mit einem zweiten Drucksensor 38 zylinderseitig ausgestattet. Entsprechend ist der Hydraulikzylinder 26 mit einem dritten Drucksensor 40 kolbenseitig und mit einem zweiten Drucksensor 42 zylinderseitig ausgestattet. Über nicht dargestellte Schaltventile ist ein Hydraulikfluss zum Betreiben der Hydraulikzylinder 22, 26 regelbar.

Die Sensoreinrichtung 24 umfasst ferner eine elektronische Steuereinheit 44, die mit einem Bedienhebel 46, beispielsweise in Form eines Joysticks, verbunden ist. Der Bedienhebel 46 ermöglicht einer Bedienperson die Eingabe von Steuerbefehlen zur Bedienung der Hubvorrichtung 12. Die Steuereinheit 44 ist über Sensorleitungen 48 mit den Beschleunigungssensoren 30, 32, 34, mit den Drucksensoren 36, 38, 40 und über nicht dargestellte Steuerleitungen mit den ebenfalls nicht dargestellten Schaltventilen verbunden. Ebenfalls nicht dargestellt sind für die Versorgung der Hydraulikzylinder 22, 26 erforderliche Hydraulikpumpe und Hydraulikreservoir. Alternativ zu den Sensorleitungen 48 kann ein nicht dargestelltes BUS-System vorgesehen sein.

Die Gewichtskraft einer Nutzlast $m_L$ wird mithilfe einer offenen kinematischen Kette bestimmt. Dazu wird kontinuierlich für jedes Gelenk das Drehmoment gemessen. Darüber hinaus werden für die einzelnen Glieder der kinematischen Kette - bei dem vorliegenden Ausführungsbeispiel die Schwinge 20 und die Laderschaufel 28 - die Kräfte im Schwerpunkt mithilfe von gemessenen Beschleunigungen errechnet. Mit den Kräften und dem Vektor von der jeweiligen Schwenkachse $Y_1$, $Y_2$ zum Schwerpunkt errechnet sich das resultierende Drehmoment um die jeweilige Schwenkachse $Y_1$, $Y_2$. Indem das Momentengleichgewicht um die beiden Schwenkachse $Y_1$, $Y_2$ aufgestellt wird, kann durch folgende Formel die Masse der Nutzlast $m_L$ bestimmt werden:

$$m_L = [(TQ_1 - TQ_2 - m_{Ausleger} * [\vec{r}_{COGAusleger} \, x \, \vec{a}_{Ausleger}] - m_{Anbau} * [\vec{r}_N \, x \, (\downarrow \, {}^{K4}_{K3}R * \vec{a}_{Anbau}] -$$

$$J_{Ausleger} * (\ddot{\vec{\varphi}}_{Ausleger} - \ddot{\vec{\varphi}}_{Fahrzeug}) + (J_{Anbau} + J_{Nutzlast}) * (\ddot{\vec{\varphi}}_{Anbau} - 2\ddot{\vec{\varphi}}_{Ausleger} + \ddot{\vec{\varphi}}_{Fahrzeug})]_y / [\vec{r}_N \, x \, (\downarrow$$

$${}^{K4}_{K3}R * \vec{a}_{Nutzlast})]_y,$$

wobei

$m_L$      die Masse der Nutzlast,

$TQ_1$, $TQ_2$      das Drehmoment um die Schwenkachse $Y_1$ bzw. $Y_2$,

$a_{Fahrzeug}$, $a_{Ausleger}$, $a_{Anbau}$      die Beschleunigungen des Auslegers bzw. des Anbaus,

$J_{Ausleger}$, $J_{Anbau}$, $J_{Nutzlast}$      die Trägheitsmomente des Auslegers, des Anbaus bzw. der Nutzlast,

$\ddot{\vec{\varphi}}_{Fahrzeug}$, $\ddot{\vec{\varphi}}_{Ausleger}$, $\ddot{\vec{\varphi}}_{Anbau}$      die Winkelbeschleunigung des Fahrzeugs, des Auslegers, des Anbaus

$r_N$      die Länge des ersten Auslegerelements in einer zur Schwenkachse $Y_1$ senkrechten Richtung,

$m_{Ausleger}$      die Masse des ersten Auslegerelements,

$r_{COGAusleger}$      die Lage der Masse $m_{Ausleger}$ bezogen auf die Schwenkachse $Y_1$,

$m_{Anbau}$      die Masse des Anbauelements,

$r_{COGAnbau}$      die Lage der Masse $m_{Anbau}$ bezogen auf die Schwenkachse $Y_2$ sind.

Bezugszeichenliste

10      Arbeitsmaschine
12      Hubvorrichtung
14      Wiegeeinrichtung
16      Rahmen
18      Konsole
20      Auslegerelement
22      Betätigungsvorrichtung
24      Sensoreinrichtung
26      Betätigungsvorrichtung
28      Anbauelement
30      Beschleunigungssensor
32      Beschleunigungssensor

34    Beschleunigungssensor
36    Drucksensor
38    Drucksensor
40    Drucksensor
42    Drucksensor
44    Steuereinheit
46    Bedienhebel
48    Sensorleitungen

**Patentansprüche**

1. Arbeitsmaschine (10) mit einer Hubvorrichtung (12) zum Heben und Senken einer Nutzlast ($m_L$) und mit einer Wiegeeinrichtung (14) zum Wiegen der Nutzlast ($m_L$), wobei die Hubvorrichtung (12) zumindest ein erstes an einem Rahmenelement (16) der Arbeitsmaschine (10) um eine erste Schwenkachse ($Y_1$) schwenkbar angeordnetes Auslegerelement (20) und ein an dem zumindest ersten Auslegerelement (20) um eine zweite Schwenkachse ($Y_2$) schwenkbar angeordnetes Anbauelement (28) zum Aufnehmen der Nutzlast ($m_L$) aufweist, wobei die erste und die zweite Schwenkachse ($Y_1$, $Y_2$) parallel zueinander verlaufen,
wobei die Hubvorrichtung (12) eine erste Betätigungsvorrichtung (22) zum Verstellen des ersten Auslegerelements (20) und eine zweite Betätigungsvorrichtung (26) zum Verstellen des Anbauelements (28) aufweist, wobei die Wiegeeinrichtung (14) eine mit der Hubvorrichtung (12) funktional gekoppelte Sensoreinrichtung (24) aufweist, um ein erstes Kraftsignal als eine Funktion einer durch die erste Betätigungsvorrichtung (22) aufgebrachten ersten Kraft bereitzustellen, um ferner ein zweites Kraftsignal als eine Funktion einer durch die zweite Betätigungsvorrichtung (26) aufgebrachten zweiten Kraft bereitzustellen, um ferner ein Beschleunigungssignal als eine Funktion einer auf das Rahmenelement (16) der Arbeitsmaschine (10) wirkenden Beschleunigung bereitzustellen,
wobei eine elektronische Steuereinheit (24) aus dem ersten Kraftsignal, dem zweiten Kraftsignal und dem Beschleunigungssignal die über das Anbauelement (28) aufgenommene Nutzlast ($m_L$) bestimmt,
wobei die Sensoreinrichtung (24) einen mit dem zumindest ersten Auslegerelement (20) funktional gekoppelten Beschleunigungssensor (32) aufweist, um das Beschleunigungssignal als eine Funktion einer auf das erste Auslegerelement (20) wirkenden Beschleunigung bereitzustellen, und
einen mit dem Anbauelement (28) funktional gekoppelten Beschleunigungssensor (34) aufweist, um eine Relativbewegung des Anbauelements (28) gegenüber dem Auslegerelement (20) um die Schwenkachse ($Y_2$) zu detektieren.

2. Arbeitsmaschine (10) nach Anspruch 1, wobei durch eine Gegenüberstellung von über das erste und zweite Kraftsignal berechneten Drehmomenten um die Schwenkachsen $Y_1$ und $Y_2$ und von über das Beschleunigungssignal berechneten Drehmomenten um die Schwenkachsen $Y_1$ und $Y_2$ die über das Anbauelement (28) aufgenommene Nutzlast ($m_L$) bestimmbar ist.

3. Arbeitsmaschine (10) nach Anspruch 1 oder 2, wobei in der Wiegeeinrichtung (14) zur Bestimmung der Nutzlast ($m_L$) die Werte

    - Länge ($r_N$) des ersten Auslegerelements in einer zur Schwenkachse $Y_1$ senkrechten Richtung,
    - Masse ($m_{Ausleger}$) des ersten Auslegerelements,
    - Schwerpunktlage ($r_{COGAusleger}$) der Masse ($m_{Ausleger}$) bezogen auf die Schwenkachse ($Y_1$),
    - Masse ($m_{Anbau}$) des Anbauelements,
    - Schwerpunktlage ($r_{COGAnbau}$) der Masse ($m_{Anbau}$) bezogen auf die Schwenkachse ($Y_2$)

abgelegt sind.

4. Arbeitsmaschine (10) nach Anspruch 1, wobei die über das Anbauelement (28) aufgenommene Nutzlast ($m_L$) näherungsweise über die Formel

$$m_\text{L} = [(TQ_1 - TQ_2 - m_\text{Ausleger} * [\vec{r}_\text{COGAusleger} \, x \, \vec{a}_\text{Ausleger}] - m_\text{Anbau} * [\vec{r}_\text{N} \, x \, (\downarrow \tfrac{K4}{K3} R * \vec{a}_\text{Anbau}]$$

$$- J_\text{Ausleger} * (\ddot{\vec{\varphi}}_\text{Ausleger} - \ddot{\vec{\varphi}}_\text{Fahrzeug}) + (J_\text{Anbau} + J_\text{Nutzlast})$$

$$* (\ddot{\vec{\varphi}}_\text{Anbau} - 2\ddot{\vec{\varphi}}_\text{Ausleger} + \ddot{\vec{\varphi}}_\text{Fahrzeug})]y/[\vec{r}_\text{N} \, x \, (\downarrow \tfrac{K4}{K3} R * \vec{a}_\text{Nutzlast})]y$$

bestimmbar ist, wobei

$m_\text{L}$ die Masse der Nutzlast,
$TQ_1$, $TQ_2$ das Drehmoment um die Schwenkachse $Y_1$ bzw. $Y_2$,
$a_\text{Fahrzeug}$, $a_\text{Ausleger}$, $a_\text{Anbau}$ die Beschleunigungen des Auslegers bzw. des Anbaus,
$J_\text{Ausleger}$, $J_\text{Anbau}$, $J_\text{Nutzlast}$ die Trägheitsmomente des Auslegers, des Anbaus bzw. der Nutzlast,
$\ddot{\vec{\varphi}}_\text{Fahrzeug}$, $\ddot{\vec{\varphi}}_\text{Ausleger}$, $\ddot{\vec{\varphi}}_\text{Anbau}$ die Winkelbeschleunigung des Fahrzeugs, des Auslegers, des Anbaus sind.

5. Arbeitsmaschine nach einem der Ansprüche 1 bis 4, wobei die Hubvorrichtung (12) zumindest ein zweites an dem ersten Auslegerelement (20) um eine dritte Schwenkachse ($Y_3$) schwenkbar angeordnetes zweites Auslegerelement aufweist, wobei das Anbauelement () um die zweite Schwenkachse ($Y_2$) schwenkbar an dem zweiten Auslegerelement angeordnet ist.

6. Verfahren zum Wiegen einer von einer Arbeitsmaschine (10) mit einer Hubvorrichtung (12) zum Heben und Senken einer Nutzlast ($m_\text{L}$) und mit einer Wiegeeinrichtung (14) zum Wiegen der Nutzlast ($m_\text{L}$) aufgenommenen Nutzlast ($m_\text{L}$) nach einem der vorangegangenen Ansprüche, bei dem aus dem ersten Kraftsignal, dem zweiten Kraftsignal und dem Beschleunigungssignal die über das Anbauelement (28) aufgenommene Nutzlast ($m_\text{L}$) bestimmt wird.

**Claims**

1. Working machine (10) having a lifting device (12) for lifting and lowering a payload ($m_\text{L}$), and having a weighing device (14) for weighing the payload ($m_\text{L}$), wherein the lifting device (12) has at least a first boom element (20) arranged on a frame element (16) of the working machine (10) such that it can be pivoted about a first pivot axis ($Y_1$), and an attachment element (28) arranged on the at least one first boom element (20) such that it can be pivoted about a second pivot axis ($Y_2$) for picking up the payload ($m_\text{L}$), wherein the first and the second pivot axis ($Y_1$, $Y_2$) run parallel to each other,
   wherein the lifting device (12) has a first actuating device (22) for adjusting the first boom element (20) and a second actuating device (26) for adjusting the attachment element (28),
   wherein the weighing device (14) has a sensor device (24) functionally coupled to the lifting device (12), in order to provide a first force signal as a function of a first force applied by the first actuating device (22), in order further to provide a second force signal as a function of a second force applied by the second actuating device (26), in order further to provide an acceleration signal as a function of an acceleration acting on the frame element (16) of the working machine (10),
   wherein an electronic control unit (24) determines the payload ($m_\text{L}$) picked up by the attachment element (28) from the first force signal, the second force signal and the acceleration signal,
   wherein the sensor device (24) has an acceleration sensor (32) functionally coupled to the at least first boom element (20) in order to provide the acceleration signal as a function of an acceleration acting on the first boom element (20), and
   has an acceleration sensor (34) functionally coupled to the attachment element (28) in order to detect a relative movement of the attachment element (28) relative to the boom element (20) about the pivot axis ($Y_2$).

2. Working machine (10) according to Claim 1, wherein, by means of comparing torques about the pivot axes $Y_1$ and $Y_2$, calculated via the first and second force signal, and torques about the pivot axes $Y_1$ and $Y_2$ calculated via the acceleration signal, the payload ($m_\text{L}$) picked up by the attachment element (28) can be determined.

3. Working machine (10) according to Claim 1 or 2, wherein, to determine the payload ($m_\text{L}$), the values

   - length ($r_\text{N}$) of the first boom element in a direction perpendicular to the pivot axis $Y_1$,
   - mass ($m_\text{Ausleger}$) of the first boom element,

- centre of gravity ($r_{COGAusleger}$) of the mass ($m_{Ausleger}$) relative to the pivot axis ($Y_1$),
- mass ($m_{Anbau}$) of the attachment element,
- centre of gravity ($r_{COGAnbau}$) of the mass ($m_{Anbau}$) relative to the pivot axis ($Y_2$)

are stored in the weighing device (14).

4.  Working machine (10) according to Claim 1, wherein the payload ($m_L$) picked up by the attachment element (28) can be determined approximately via the formula

$$m_L = [(TQ_1 - TQ_2 - m_{Ausleger} * [\vec{r}_{COGAusleger} \, x \, \vec{a}_{Ausleger}] - m_{Anbau} * [\vec{r}_N \, x \, (\downarrow {}^{K4}_{K3}R * \ddot{a}_{Anbau}]$$
$$- J_{Ausleger} * (\ddot{\vec{\varphi}}_{Ausleger} - \ddot{\vec{\varphi}}_{Fahrzeug}) + (J_{Anbau} + J_{Nutzlast})$$
$$* (\ddot{\vec{\varphi}}_{Anbau} - 2\ddot{\vec{\varphi}}_{Ausleger} + \ddot{\vec{\varphi}}_{Fahrzeug})]y/[\vec{r}_N \, x \, (\downarrow {}^{K4}_{K3}R * \vec{a}_{Nutzlast})]y$$

where

$m_L$ is the mass of the payload,
$TQ_1$, $TQ_2$ is the torque about the pivot axis $Y_1$ and $Y_2$,
$a_{Fahrzeug}$, $a_{Ausleger}$, $a_{Anbau}$ are the accelerations of the boom and the attachment,
$J_{Ausleger}$, $J_{Anbau}$, $J_{Nutzlast}$ are the moments of inertia of the boom, the attachment and the payload,
$\ddot{\vec{\varphi}}_{Fahrzeug}$, $\ddot{\vec{\varphi}}_{Ausleger}$, $\ddot{\vec{\varphi}}_{Anbau}$, , are the angular acceleration of the vehicle, the boom and the attachment.

5.  Working machine according to one of Claims 1 to 4, wherein the lifting device (12) has at least one second boom element arranged on the first boom element (20) such that it can pivot about a third pivot axis ($Y_3$), wherein the attachment element() is arranged such that it can pivot on the second boom element about the second pivot axis ($Y_2$).

6.  Method for weighing a payload ($m_L$) picked out by a working machine (10) having a lifting device (12) for lifting and lowering a payload ($m_L$) and having a weighing device (14) for weighing the payload ($m_L$) according to one of the preceding claims, in which the payload ($m_L$) picked up by the attachment element (28) is determined from the first force signal, the second force signal and the acceleration signal.

**Revendications**

1.  Machine de travail (10) comprenant un dispositif de levage (12) destiné à soulever et abaisser une charge utile ($m_L$) et un moyen de pesage (14) destiné à peser la charge utile ($m_L$), le dispositif de levage (12) comportant au moins un premier élément formant flèche (20) disposé au niveau d'un élément formant cadre (16) de la machine de travail (10) de façon à pouvoir pivoter sur un premier axe de pivotement ($Y_1$) et un élément de montage (28) disposé au niveau de l'au moins un premier élément formant flèche (20) de façon à pouvoir pivoter sur un deuxième axe de pivotement ($Y_2$) et destiné à recevoir la charge utile ($m_L$), les premier et deuxième axes de pivotement ($Y_1$, $Y_2$) étant parallèles l'un à l'autre,
le dispositif de levage (12) comportant un premier dispositif d'actionnement (22) destiné à déplacer le premier élément formant flèche (20) et un deuxième dispositif d'actionnement (26) destiné à déplacer l'élément de montage (28),
le moyen de pesage (14) comportant un dispositif de détection (24) couplé fonctionnellement au dispositif de levage (12) et destiné à délivrer un premier signal de force en fonction d'une première force appliquée par le premier dispositif d'actionnement (22), délivrer en outre un deuxième signal de force en fonction d'une deuxième force appliquée par le deuxième dispositif d'actionnement (26), délivrer en outre un signal d'accélération en fonction d'une accélération agissant sur l'élément formant cadre (16) de la machine de travail (10),
une unité de commande électronique (24) déterminant la charge utile ($m_L$), reçue par le biais de l'élément de montage (28), à partir du premier signal de force, du deuxième signal de force et du signal d'accélération,
le moyen de détection (24) comportant un capteur d'accélération (32) couplé fonctionnellement à l'au moins premier élément formant flèche (20) et destiné à délivrer le signal d'accélération en fonction d'une accélération agissant sur le premier élément formant flèche (20), et comportant
un capteur d'accélération (34) couplé fonctionnellement à l'élément de montage (28) et destiné à détecter un mouvement relatif de l'élément de montage (28) par rapport à l'élément formant flèche (20) sur l'axe de pivotement ($Y_2$).

2. Machine de travail (10) selon la revendication 1, la charge utile ($m_L$) reçue par l'élément de montage (28) pouvant être déterminée par comparaison des couples, calculés par le biais des premier et deuxième signaux de force, autour des axes de pivotement $Y_1$ et $Y_2$ et des couples, calculés par le biais du signal d'accélération, autour des axes pivotants $Y_1$ et $Y_2$.

3. Machine de travail (10) selon la revendication 1 ou 2, les valeurs

   - longueur ($r_N$) du premier élément formant flèche dans une direction perpendiculaire à l'axe de pivotement $Y_1$,
   - masse ($m_{flèche}$) du premier élément formant flèche,
   - centre de gravité ($r_{CDGflèche}$) de la masse ($m_{flèche}$) par rapport à l'axe de pivotement ($Y_1$),
   - masse ($m_{montage}$) de l'élément de montage,
   - centre de gravité ($r_{COGmontage}$) de la masse ($m_{montage}$) par rapport à l'axe de pivotement ($Y_2$)

   étant stockées dans le moyen de pesage (14) pour déterminer la charge utile ($m_L$).

4. Machine de travail (10) selon la revendication 1, la charge utile ($m_L$) reçue via l'élément de montage (28) pouvant être déterminée de manière approchée par la formule

$$m_L = \left[ (TQ_1 - TQ_2 - m_{flèche} * [\vec{r}_{CDGflèche} \times \vec{a}_{flèche}] - m_{montage} * [\vec{r}_N \times (\downarrow \frac{K4}{K3} R * \vec{a}_{montage}] - J_{flèche} * (\ddot{\vec{\varphi}}_{flèche} - \ddot{\vec{\varphi}}_{véhicule}) + (J_{montage} + J_{charge\ utile}) * (\ddot{\vec{\varphi}}_{montage} - 2\ddot{\vec{\varphi}}_{flèche} + \ddot{\vec{\varphi}}_{véhicule}) \right]y / [\vec{r}_N \times (\downarrow \frac{K4}{K3} R * \vec{a}_{charge\ utile})]y$$

   avec

   $m_L$ :la masse de la charge utile $TQ_1$, $TQ_2$ : le couple autour de l'axe de pivotement $Y_1$ ou $Y_2$,
   $a_{véhicule}$, $a_{flèche}$, $a_{montage}$ : les accélérations de la flèche ou du montage,

   $J_{flèche}$, $J_{montage}$, $J_{charge\ utile}$ : les moments d'inertie de la flèche, du montage ou de la charge utile, $\ddot{\vec{\varphi}}_{véhicule}$,

   $\ddot{\vec{\varphi}}_{flèche}$, $\ddot{\vec{\varphi}}_{montage}$ : l'accélération angulaire du véhicule, de la flèche ou de la charge utile.

5. Machine de travail selon l'une des revendications 1 à 4, le dispositif de levage (12) comportant au moins un deuxième élément formant flèche disposé au niveau du premier élément formant flèche (20) de manière à pouvoir pivoter sur un troisième axe de pivotement ($Y_3$), l'élément de montage () étant disposé au niveau du deuxième élément formant flèche de manière à pouvoir pivoter sur le deuxième axe de pivotement ($Y_2$).

6. Procédé de pesage d'une charge utile ($M_L$) reçue par une machine de travail (10) comprenant un dispositif de levage (12) destiné à soulever et abaisser une charge utile ($m_L$) et un moyen de pesage (14) destiné à peser la charge utile ($m_L$) selon l'une des revendications précédentes, procédé dans lequel la charge utile ($m_L$) reçue par l'élément de montage (28) est déterminée à partir du premier signal de force, du deuxième signal de force et du signal d'accélération.

Figur

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009051210 A1